Europäisches Patentamt

European Patent Office

Office européen des brevets

(11) Veröffentlichungsnummer: **0 397 109**

**A1**

(12) **EUROPÄISCHE PATENTANMELDUNG**

(21) Anmeldenummer: **90108648.8**

(22) Anmeldetag: **08.05.90**

(51) Int. Cl.5: **B64C 31/02, B64D 17/02**

(30) Priorität: **09.05.89 DE 8905793 U**

(43) Veröffentlichungstag der Anmeldung:
**14.11.90 Patentblatt 90/46**

(84) Benannte Vertragsstaaten:
**AT CH DE FR GB IT LI**

(71) Anmelder: **Vonblon, Elmar**
**IM Grav 33**
**A-6710 Nenzing(AT)**

(72) Erfinder: **Vonblon, Elmar**
**IM Grav 33**
**A-6710 Nenzing(AT)**

(74) Vertreter: **WILHELMS, KILIAN & PARTNER**
**Patentanwälte**
**Eduard-Schmid-Strasse 2**
**D-8000 München 90(DE)**

(54) **Körperhalterung für ein fussstartfähiges Fluggerät.**

(57) Es wird eine Körperhalterung für ein fußstartfähiges Fluggerät, insbesondere Brustteil oder Fußbett für einen Hängegleiter oder Sitz für einen Gleitschirm oder ein Gleitsegel beschrieben, die eine Anzahl von lattenförmigen Bauteilen (1) aufweist, die an ihren in Querrichtung zum Körper verlaufenden Kanten gelenkig miteinander verbunden sind, wobei diese vorzugsweise an einer Längskante mit einer Nut in Form einer im Querschnitt kreisförmigen Hohlkehle (2) und an der anderen Längskante mit einem Rundstabprofil (3) ausgebildet sind, dessen Außenabmessung im wesentlichen gleich der Innenabmessung der Nut ist.

EP 0 397 109 A1

## Körperhalterung für ein fußstartfähiges Fluggerät

Die Erfindung betrifft eine Körperhalterung für ein fußstartfähiges Fluggerät, insbesondere einen Brustteil oder ein Fußbett für einen Hängegleiter oder einen Sitz für einen Gleitschirm oder ein Gleitsegel.

Unter fußstartfähigen Fluggeräten werden im allgemeinen Gleitschirme, Gleitsegel und Hängegleiter verstanden. Derartige Fluggeräte werden von einer Person durch Anlaufen gestartet, wobei nach Abheben des Fluggerätes diese Person mit ihrem Körper in einer Körperhalterung angeordnet ist, die über Gurte im Fluggerät aufgehängt, d.h. mit dem Segel oder Schirm verbunden ist.

Bei einem Hängegleiter ist der Körper der Person in der Flugphase im wesentlichen horizontal angeordnet, wobei der Oberkörper auf einem Brustteil gehalten ist, während die Füße auf einem Fußbett liegen. Bei einem Gleitschirm oder Gleitsegel ist als Körperhalterung ein Sitz vorgesehen, der aus einem Sitzteil und einer Rückenlehne besteht, in der die Person während der Flugphase sitzt.

Herkömmliche Sitze für eine Gleitschirm oder ein Gleitsegel sind mit einem Sitzteil versehen, das aus einem starren Brett besteht, das in einer Hülle aufgenommen ist, die zur Erhöhung des Komforts gepolstert ist. Der Sitz ist über seitliche Gurte mit einem Hauptgurt verbunden, an dem der Sitz im Fluggerät aufgehängt ist.

Derartige starre Bauteile wie beispielsweise starre Bretter als Halterungen für den Körper der fliegenden Person sind trotz einer vorgesehenen Polsterung außerordentlich unbequem, da die Kanten des starren Brettes zu spüren sind und somit kein optimaler Auflage- oder Sitzkomfort erzielbar ist. Das macht sich bei Flugzeiten von 3 bis 4 Stunden außerordentlich unangenehm bemerkbar.

Weiterhin ergeben sich Probleme beim Start und bei der Landung, insbesondere bei einem Sitz für einen Gleitschirm oder ein Gleitsegel, wenn der Sitzteil aus einem starren Brett besteht, da dieses von hinten gegen die beim Starten und beim Landen laufende Person drückt, da keinerlei Anpassung der Form des Sitzteiles möglich ist. Um dieses Problem zu mindern, ist es bisher weiterhin üblich, dem Sitzteil für den Sitz eines Gleitschirmes oder Gleitsegels nur eine möglichst geringe Tiefe zu geben, da mit größerer Sitztiefe das starre Brett des Sitzteiles stärker gegen die Rückseite der beim Landen und beim Starten laufenden Person drückt.

Die der Erfindung zugrundeliegende Aufgabe besteht demgegenüber darin, eine Körperhalterung für ein fußstartfähiges Fluggerät zu schaffen, die einen höheren Komfort bietet und insbesondere beim Landen und Starten nicht behindert.

Diese Aufgabe wird gemäß der Erfindung dadurch gelöst, daß die Halterung aus einer Anzahl von lattenförmigen Bauteilen besteht, die an ihren in Querrichtung zum Körper verlaufenden Kanten gelenkig miteinander verbunden sind.

Bei der erfindungsgemäßen Körperhalterung ist somit kein starres Brett vorgesehen, sondern sind mehrere gegeneinander in Längsrichtung des Körpers schwenkbare lattenförmige Bauteile angeordnet, so daß eine Anpassung der Halterung im Profil an den aufliegenden Körper oder darauf sitzenden Körper der Person im Fluggerät während der Flugphase möglich ist.

Bei einem Sitz für einen Gleitschirm oder ein Gleitsegel ist es darüber hinaus möglich, eine Behinderung durch den Sitzteil beim Starten oder Landen zu vermeiden, da die vorderen lattenförmigen Bauteile so abgewinkelt werden können, daß sich eine Rundung ergibt, so daß der Sitzteil nicht mehr gegen die Rückseite der beim Start und beim Landen laufenden Person drückt. Es ist somit eine optimale Anpassung beim Starten und beim Landen durch eine entsprechende Stellung der Sitzteilelemente möglich. Da eine derartige Anpassung möglich ist, kann weiterhin auch die Sitztiefe vergrößert werden, was gleichfalls zu einem höheren Sitzkomfort beiträgt.

Vorzugsweise sind die lattenförmigen Bauteile derart gelenkig miteinander verbunden, daß sie nur um einen begrenzten Winkel gegeneinander schwenkbar sind, so daß eine gewisse Stabilität innerhalb bestimmter Grenzen erzielt ist. Diese begrenzte Schwenkbarkeit kann derart sein, daß in der einen Grenzstellung die lattenförmigen Bauteile ein ebenes Bauelement bilden, das die Form eines Brettes hat, jedoch aufgrund der gelenkigen Verbindung der einzelnen Bauteile in seinem Profil verändert werden kann.

Die lattenförmigen Bauteile können insbesondere gezogene Aluminiumprofilleisten sein, die an ihren Längskanten mit einer Nut in Form einer im Querschnitt kreisförmigen Hohlkehle und an der anderen Längskante mit einem Rundstab profil ausgebildet sind, dessen Außenabmessung im wesentlichen gleich der Innenabmessung der Nut ist. Bei einer derartigen Ausbildung wird das Rundstabprofil eines Bauteils in der Nut der kreisförmigen Hohlkehle eines anderen Bauteils angeordnet, so daß sich eine scharnierartige Verbindung ergibt.

Die lattenartige Bauteile können auch aus einem anderem Material als Aluminium im einfachsten Fall sogar aus Holz bestehen, wobei in diesem Fall die Holzlatten über Scharniere miteinander verbunden sind.

Bei einem besonders bevorzugten Ausführungsbeispiel der Erfindung ist das aus den lattenförmigen Bauteilen bestehende Bauelement in einer gepolsterten Hülle angeordnet, an deren in Längsrichtung des Körpers verlaufenden Ränder Gurte an Stellen angeordnet sind, die den Enden der lattenartigen Bauteile entsprechen, wobei diese Gurte mit einem Hauptgurt zum Aufhängen der Halterung am Schirm oder Segel verbunden sind.

Bei einer derartigen Ausbildung ist es möglich, die relative Lage der lattenartige Bauteile zueinander in Abhängigkeit von dem Anstellwinkel des Schirmes oder Segels zu steuern.

Im folgenden wird anhand der zugehörigen Zeichnung ein besonders bevorzugtes Ausführungsbeispiel der Erfindung näher beschrieben. Es zeigen

Fig. 1 eine perspektivische Ansicht eines bevorzugten Ausführungsbeispiels eines erfindungsgemäßen Sitzteils eines Sitzes für einen Gleitschirm,

Fig. 2 das Profil der einzelnen Bauteile des in Fig. 1 dargestellten Sitzteils,

Fig. 3 eine Querschnittsansicht eines Bauteils des in Fig. 1 dargestellten Ausführungsbeispiels und

Fig. 4 und 5 in vergrößerten Ansichten die Hohlkehle und das Rundstabprofil bei den Bauteilen des in Fig. 1 darge stellten Ausführungsbeispiels der Erfindung.

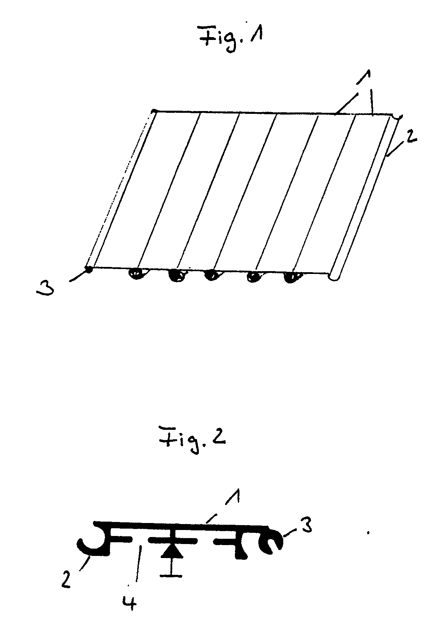

Das in Fig. 1 dargestellte Ausführungsbeispiel des erfindungsgemäßen Sitzteils des Sitzes für einen Gleitschirm besteht aus einer Anzahl von lattenartige Bauteile 1, die gelenkig in Querrichtung zum Körper der Person im Sitz gelenkig miteinander verbunden sind. Es sei in diesem Zusammenhang darauf hingewiesen, daß auch die Rückenlehne des Sitzes in gleicher Weise aus lattenartigen Bauteilen 1 aufgebaut sein kann, die gelenkig miteinander verbunden sind.

Wie es in Fig. 2 im einzelnen dargestellt ist, bestehen die lattenartige Bauteile 1 aus Profilteilen, beispielsweise aus gezogenen Aluminiumprofilen, die an ihren Längskanten einerseits mit einer Hohlkehle 2, die eine Nut bildet, und andererseits mit einem Hohlstabprofil 3 versehen sind, dessen Außenabmessungen derart sind, daß sie im wesentlichen den Innenabmessungen der Nut in der Hohlkehle 2 entsprechen. Die Verbindung der Bauteile 1 kann dann derart erfolgen, daß ein Bauteil mit seinem Rundstabprofil 3 in die Hohlkehle 2 eines anderen Bauteils eingeschoben wird.

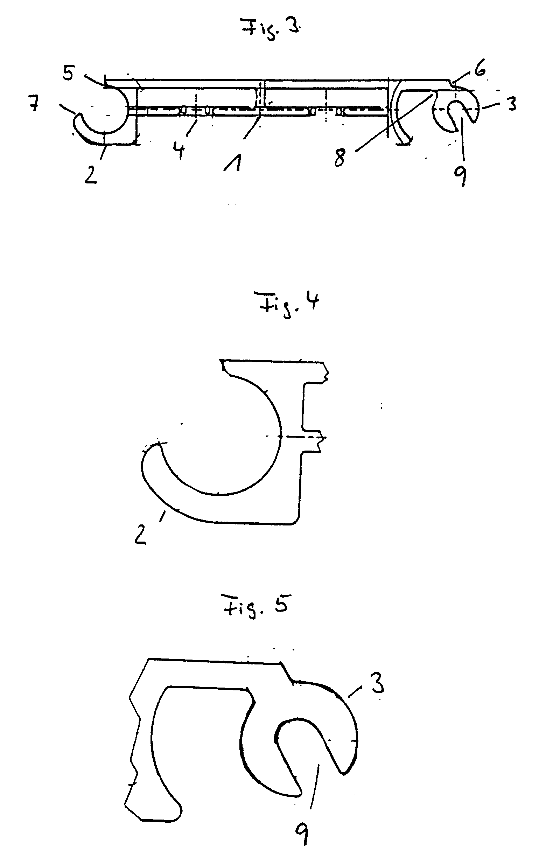

Fig. 3 zeigt in einer Querschnittsansicht das in Fig. 2 dargestellte Profil im einzelnen. Aus dieser Darstellung ergibt sich, daß die Bauteile 1 derart schwenkbar miteinander verbunden werden können, daß sie über einen begrenzten Winkel relativ zueinander schwenkbar sind. Dieser Winkel ist einerseits durch den Anschlag der Vorderkante 7 der Hohlkehle 2 an der Innenkehle 8 an der Außenseite des Rundstabprofils 3 und andererseits durch den Anschlag der anderen Vorderkante 5 der Hohlkehle 2 an der Stirnfläche 6 auf der Seite des Rundstabprofils 3 begrenzt. In der einen Extremstellung ergibt sich dann ein Bauteil, das eine ebene Außenfläche zeigt. Aus dieser Form heraus können die einzelnen Profile 1 gegeneinander um den genannten Winkel verschwenkt werden.

Wie es in Fig. 2 und in Fig. 3 dargestellt ist, sind in den Profilen 1 Ausnehmungen 4 ausgebildet, die dazu dienen, Gurte hindurchzuführen, über die der Sitz im Gleitschirm oder Gleitsegel aufgehängt ist. Diese Gurte können dazu benutzt werden, die Stellung der einzelnen Profilteile relativ zueinander zu steuern.

Wie es insbesondere in Fig. 5 dargestellt ist, kann das Rundstabprofil 3 mit einer Nut 9 versehen sein, was aus Gründen der Gewichtsersparnis vorteilhaft ist.

Das in Fig. 1 dargestellte Sitzteil kann in einer gepolsterten Hülle angeordnet werden, die an ihren in Körperrichtung verlaufenden Längskanten mit Gurten versehen ist, die an Stellen angreifen, die den Enden der Profile 1 entsprechen. Auf diese Weise kann die Stellung der einzelnen Profile 1 über die an ihren Enden angreifenden Gurte selektiv gesteuert werden, die ihrerseits mit dem Hauptgurt zum Aufhängen des Sitzes verbunden sind.

Obwohl im obigen als besonders bevorzugtes Ausführungsbeispiel der Erfindung der Sitz, insbesondere der Sitzteil des Sitzes, für einen Gleitschirm oder ein Gleitsegel beschrieben wurde, kann die erfindungsgemäße Ausbildung auch beim Brustteil oder Fußbett für einen Hängegleiter vorgesehen sein.

Es ist ersichtlich, daß aufgrund der gelenkigen Verbindung der einzelnen Profile die erfindungsgemäße Körperhalterung eine optimale Anpassung an den Körper in jeder Flugphase, d.h. auch beim Starten und Landen, gewährleistet, da sie abrollen kann, was bei einem starren oder auch biegsamen Brett nicht der Fall wäre.

Die Breite und dementsprechend die Anzahl der einzelnen miteinander verbundenen lattenartige Bauteile oder Profile hängt von den jeweils ge- wünschten Anpassungsmöglichkeiten und Einstell- möglichkeiten ab. Gewöhnlich liegt die Breite der Profilteile im Bereich von wenigen Zentimetern.

## Ansprüche

1. Körperhalterung für ein fußstartfähiges Fluggerät, insbesondere Brustteil oder Fußbett für einen Hängegleiter oder Sitz für einen Gleitschirm oder ein Gleitsegel, **gekennzeichnet** durch eine Anzahl von lattenförmigen Bauteile (1), die an ihren in Querrichtung zum Körper verlaufenden Kanten gelenkig miteinander verbunden sind.

2. Halterung nach Anspruch 1, dadurch gekennzeichnet, daß die gelenkige Verbindung der lattenförmigen Bauteile (1) derart ausgebildet ist, daß die lattenförmigen Bauteile (1) nur um einen begrenzten Winkel gegeneinander schwenkbar sind.

3. Halterung nach Anspruch 1 oder 2, dadurch gekennzeichnet, daß die lattenförmigen Bauteile (1) gezogene Aluminiumprofilleisten sind, die an einer Längskante mit einer Nut in Form einer im Querschnitt kreisförmigen Hohlkehle (2) und an der anderen Längskante mit einem Rundstabprofil (3) ausgebildet sind, dessen Außenabmessung im wesentlichen gleich der Innenabmessung der Nut ist.

4. Halterung nach Anspruch 1 oder 2, dadurch gekennzeichnet, daß die lattenförmigen Bauteile (1) über Scharniere miteinander verbunden sind.

5. Halterung nach einem der vorhergehenden Ansprüche, dadurch gekennzeichnet, daß die miteinander verbundenen lattenförmigen Bauteile (1) in einer gepolsterten Hülle angeordnet sind, an deren in Längsrichtung des Körpers verlaufenden Rändern Gurte an Stellen angebracht sind, die Enden der lattenförmigen Bauteile (1) entsprechen, wobei diese Gurte mit einem Hauptgurt zum Aufhängen der Halterung am Schirm oder Segel verbunden sind.

Fig. 1

Fig. 2

Fig. 3

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-A-2338217 (TSCHUDIN AG)<br>* Seite 1, Absatz 1 *<br>* Seite 2, Absatz 3 *<br>* Seite 3, letzter Absatz *<br>* Seite 4, letzter Absatz *<br>* Figuren *<br><br>--- | 1-5 | B64C31/02<br>B64D17/02 |
| Y | DE-A-3506620 (ZEIER)<br>* das ganze Dokument *<br><br>--- | 1-5 | |
| | DE-U-8800553 (LIEGLEIN)<br>----- | | |

|  |
|---|
| **RECHERCHIERTE SACHGEBIETE (Int. Cl.5 )** |
| B64C<br>B64D<br>B64G<br>E05D |

Der vorliegende Recherchenbericht wurde für alle Patentansprüche erstellt

| Recherchenort | Abschlußdatum der Recherche | Prüfer |
|---|---|---|
| DEN HAAG | 14 AUGUST 1990 | ESTRELA Y CALPE J. |